# EUROPÄISCHE PATENTANMELDUNG

(11) **EP 4 125 239 A1**
(43) Veröffentlichungstag der Anmeldung: **01.02.2023**
(21) Anmeldenummer: 21188584.3
(22) Anmeldetag: 29.07.2021
(51) Int. Cl.: H04L 9/08

(54) **AUSTAUSCH QUANTENSICHERER QKD-SCHLÜSSEL**

(71) Anmelder: Deutsche Telekom AG, 53113 Bonn (DE)
(72) Erfinder: GEITZ, Marc, 58089 Hagen (DE); BRAUN, Ralf-Peter, 12305 Berlin (DE)
(74) Vertreter: Nern, Peter-Michael

(57) **Zusammenfassung**

Die Erfindung betrifft eine Lösung zum Austausch quantensicherer QKD-Schlüssel, gemäß welcher mindestens zwei, jeweils mit quantenmechanischen Mitteln zur Erzeugung derartiger QKD-Schlüssel ausgestattete, untereinander direkt nicht über einen Quantenkanal miteinander verbundene Netzeinrichtungen (QKD-Bodenstationen 1, 1') von ihnen erzeugte QKD-Schlüssel austauschen. Dabei erzeugt eine erste, mit einer Quantenquelle (Laser) ausgestattete QKD-Bodenstation (1, 1') mit einer anderen QKD-Bodenstation (1', 1) auszutauschende QKD-Schlüssel gemeinsam mit einem fliegenden QKD-Knoten (2), nämlich einem mit einem QKD-Knoten mit mindestens einem optischen Empfänger ausgestatteten Flugzeug, während sie mit diesem in einer Line of Sight ist. Der fliegende QKD-Knoten (2) verknüpft einen jeweiligen, gemeinsam mit der Bodenstation (1, 1') erzeugten QKD-Schlüssel bitweise XOR mit einem von dem fliegenden QKD-Knoten (2) gemeinsam mit der anderen QKD-Bodenstation (1',1) erzeugten QKD-Schlüssel und überträgt die entstehende Bitsequenz an beide QKD-Bodenstationen (1, 1'). Aus der Bitsequenz extrahiert die jeweilige QKD-Bodenstationen (1, 1') den von dem fliegenden QKD-Knoten (2) gemeinsam mit der jeweils anderen QKD-Bodenstation (1', 1) erzeugten QKD-Schlüssel durch abermalige bitweise XOR-Verknüpfung dieser Bitsequenz mit dem durch sie selbst gemeinsam mit dem fliegenden QKD-Knoten (2) erzeugten QKD-Schlüssel.

## Beschreibung

Die Erfindung betrifft ein Verfahren zum Austausch quantensicherer Schlüssel, nämlich von QKD-Schlüsseln, das heißt, mit Hilfe quantenmechanischer Mittel nach einem Verfahren der Quantum Key Distribution erzeugter Schlüssel. Gegenstände der Erfindung sind ein entsprechendes Verfahren und ein zur Durchführung dieses Verfahrens ausgebildetes System. Die vorgestellte Lösung ermöglicht es, QKD-Schlüssel, also quantensichere Schlüssel im vorgenannten Sinne, zwischen mindestens zwei, jeweils an ein Netzwerk angebundenen und mit quantenmechanischen Mitteln zur Erzeugung derartiger QKD-Schlüssel ausgestatteten, jedoch untereinander direkt nicht über einen Quantenkanal miteinander verbundenen Netzeinrichtungen auszutauschen.

Quantencomputer werden nach Ansicht hierzu aussagefähiger Fachleute bereits innerhalb der nächsten Dekade dazu in der Lage sein, heute noch als sicher angesehene, verbreitet eingesetzte Verschlüsselungsverfahren, welche beispielsweise auf der Primfaktorenzerlegung (RSA oder Diffie-Hellman) oder auf Algorithmen auf der Basis elliptischer Kurven (Elliptic Curve Digital Signature Algorithm, ECDSA) basieren, zu brechen. Andererseits kommt der gesicherten Übertragung von Daten über Kommunikationsnetze, zum Beispiel im Zusammenhang mit dem Ausbau der 5G-Mobilfunknetze und beispielsweise deren Nutzung für die Car-to-Car-Kommunikation oder für die Übertragung von Daten zur Steuerung von Maschinen im Rahmen von Industrie 4.0 oder aber auch im Zusammenhang mit der zunehmenden Nutzung von Smart Home Technologien, eine immer noch ständig steigende Bedeutung zu. Diese Sicherheit wird durch eine Verschlüsselung der Daten, derzeit noch mittels der bereits angesprochenen Verschlüsselungsverfahren, gewährleistet.

Die fortschreitende Entwicklung von Quantencomputern erfordert aber, unter anderem auch unter dem Aspekt der Langlebigkeit vieler Produkte und Industrieerzeugnisse, bereits heute die Entwicklung und den Einsatz neuer Verschlüsselungstechniken und Verfahren. Während die bisher gebräuchlichen Verfahren auf der Annahme beruhen, dass sie auch unter Einsatz einer größeren Zahl parallel arbeitender moderner, aber mittels herkömmlicher Technik, das heißt nicht unter Einsatz der Quantenmechanik realisierter Computer, nicht zu brechen sind, gilt dies für unter Verwendung von Quantencomputern geführte Angriffe zukünftig nicht mehr. Es gilt daher schon jetzt, Verschlüsselungsverfahren zu finden, welche auch einem Angriff mit Quantencomputern widerstehen können. Eine Möglichkeit, diesem Erfordernis zu entsprechen, besteht darin, sich auch zum Zweck der Verschlüsselung, genauer gesagt, zum Zweck der Erzeugung und Verteilung dafür zu verwendender Schlüssel, quantenmechanischer Verfahren zu bedienen.

Entsprechende, zum vorgenannten Zweck entwickelte Verfahren, welche gleichzeitig die Erzeugung von Schlüsseln auf quantenmechanischer Basis und deren Verteilung ermöglichen, werden unter dem Begriff QKD-Verfahren, QKD = Quantum Key Distribution, zusammengefasst. Eines dieser Verfahren, welches bereits auch für die Nutzung in der Praxis umgesetzt wird, ist das QKD-Verfahren nach dem BB84-Protokoll. Bei QKD-Verfahren handelt es sich um Verfahren zur Generation von quantensicheren, identischen Schlüsseln mittels quantenmechanischer Wirkprinzipien in zwei räumlich getrennten Lokationen. Danach werden die so generierten Schlüssel zur Verschlüsselung mit symmetrischen Verfahren angewendet, wobei das bei herkömmlichen Verschlüsselungsverfahren bestehende Problem des geschützten Austauschs des zur symmetrischen Verschlüsselung genutzten Schlüssels durch den Einsatz eines QKD-Verfahrens zu ihrer gleichzeitigen Erzeugung und Verteilung gelöst ist.

Allerdings ist die Errichtung QKD-Verfahren nutzender Infrastrukturen sehr aufwendig und insbesondere kostenintensiv. Soweit Quantenkanäle, wie sie zur Übertragung quantenmechanischer Zustände bei der Erzeugung quantensicherer, das heißt auch gegenüber einem Angriff mit Quantencomputern sicherer Schlüssel nach einem QKD-Verfahren erforderlich sind, physisch über Glasfasern etabliert werden, tritt hierbei der Nachteil hinzu, dass die Übertragung von Quantenzuständen über Glasfasern hinsichtlich dabei möglicher Distanzen zwischen zwei die Schlüssel gemeinsam erzeugenden Einrichtungen auf etwa 100 km limitiert ist. Grund hierfür ist die in den Glasfasern auftretende Dämpfung der Prinzip bedingt mit nur sehr geringer Leistung übertragenen Quantenzustände. Andererseits ist es nicht möglich, dieser Dämpfung im Zusammenhang mit der Anwendung von QKD-Verfahren durch Einordnung entsprechender Signalverstärker in den Lichtleitfasern zu begegnen. Dies begründet sich dadurch, dass derartige Verstärker die übertragenen Quantenzustände gewissermaßen auslesen und sie dadurch zerstören würden.

Eine Alternative besteht darin, die Quantenzustände, nämlich die sie vermittelnden optischen Lasersignale, im Wege einer Freiraumübertragung, also durch die Luft, zu übertragen. Jedoch setzt dies eine direkte Sichtverbindung der beiden, die Quantenzustände miteinander austauschenden Gegenstellen voraus. Abgesehen von eventuellen, eine solche Sichtverbindung verhindernden Hindernissen ist aber auch hierbei im Falle eines Austauschs von QKD-Signalen in Bodennähe aufgrund der Erdkrümmung eine Limitierung gegeben. Unter anderem auch vor diesem Hintergrund gibt es bereits Überlegungen für die Nutzung der Freiraumübertragung zwischen Bodenstationen und Satelliten. Allerdings ist hierbei die Erzeugung gemeinsamer QKD-Schlüssel zunächst einmal nur zwischen einer jeweiligen Bodenstation und einem Satelliten, nicht aber ein Austausch von Bodenstation zu Bodenstation möglich.

Zudem wären derartige Systeme ebenfalls mit hohen Kosten verbunden, so dass ihre Anwendung sicherlich eher speziellen Anwendungsfällen vorbehalten sein würde. Bei dazu vorgeschlagenen Systemen handelt es sich um Systeme, welche als Air-to-Ground-Systeme bezeichnet werden können. Das heißt, die Quantenquelle zur Erzeugung der im Rahmen der QKD-Verfahren benötigten Quantenzustände ist bei ihnen regelmäßig in einem Satelliten verortet. Allerdings resultiert hieraus eine entsprechend schlechte Wartbarkeit der erforderlichen, sich an Bord der Satelliten befindenden Einrichtungen. Zudem ist es als nachteilig anzusehen, dass sich Satelliten typischerweise auf Umlaufbahnen bewegen, die es mit sich bringen, dass sie für eine größere Zahl von Bodenstationen nur selten oder gar nicht sichtbar sind. Darüber hinaus ist die Sichtbarkeit von Satelliten in einem niedrigen Orbit für viele Bodenstationen sehr kurz.

Aufgabe der Erfindung ist es, eine alternative Lösung für einen sicheren Austausch mit Hilfe quantenmechanischer Mittel erzeugter QKD-Schlüssel bereitzustellen. Hierfür sollen ein Verfahren und ein zu dessen Durchführung geeignetes System angegeben werden.

Die Aufgabe wird durch ein Verfahren mit den Merkmalen des Patentanspruchs 1 gelöst. Ein die Aufgabe lösendes zur Durchführung des Verfahrens geeignetes System ist durch den ersten Sachanspruch charakterisiert. Vorteilhafte Aus- und Weiterbildungen sind durch die jeweiligen Unteransprüche gegeben.

Wie bereits eingangs ausgeführt, geht die hier vorgestellte Lösung und somit auch das die Aufgabe lösende Verfahren von einer Situation aus, gemäß welcher mindestens zwei, jeweils an ein Netzwerk angebundene, das heißt zu einem jeweiligen Netzwerk gehörende Netzeinrichtungen QKD-Schlüssel, nämlich mittels quantenmechanischer Mittel nach einem Verfahren der Quantum Key Distribution erzeugte quantensichere Schlüssel, miteinander austauschen wollen, wobei diese Netzeinrichtungen zwar über quantenmechanische Mittel zur Erzeugung solcher Schlüssel verfügen, selbst aber nicht direkt über einen Quantenkanal miteinander verbunden sind. Bei den vorgenannten Netzeinrichtungen kann es sich beispielsweise um Einrichtungen handeln, welche zum Beispiel jeweils in das Kommunikationsnetz einer von verschiedenen, weiter auseinanderliegenden Metropolregionen einbezogen sind. Derartige eine solche Metropolregion (zum Beispiel eine Großstadt wie Berlin, Hamburg oder Frankfurt oder einen anderen Ballungsraum) zum Zweck der Kommunikation vernetzende Kommunikationsnetze werden auch als Metronetze bezeichnet.

In allen im Kontext der Darstellung und Beanspruchung der Erfindung auftretenden Verwendungen des Vorsatzes "QKD-" bezieht sich dieser Vorsatz auf zur Nutzung eines Verfahrens der Quantum Key Distribution ausgebildete Einrichtungen und Verbindungen sowie auf mittels dieser erzeugte quantensichere Schlüssel. Die vorgenannten Verbindungen, also QKD-Verbindungen umfassen dabei einen Quantenkanal und jeweils einen zugehörigen gesicherten klassischen, auch als Protokollkanal oder Protokoll-Link bezeichneten Kanal. Entsprechende als QKD-Knoten fungierende Einrichtungen können über eine Quantenquelle, das heißt eine Quelle zur Erzeugung quantenmechanischer Zustände, verfügen oder auch nur zum Empfang entsprechender Quantenzustände ausgebildet sein. Als Quantensichere Schlüssel werden hierbei kryptographische Schlüssel bezeichnet, deren Austausch auch durch einen eventuellen Einsatz von Quantencomputern nicht angreifbar ist und welche hierdurch bei ihrem Austausch nicht manipulierbar sind. Ihre Spezifizierung als kryptographische Schlüssel soll lediglich zum Ausdruck bringen, dass es sich bei Ihnen um in Kommunikationssystemen und IT-Systemen zur Sicherung von Verbindungen und zur Verschlüsselung von einsetzbare Schlüssel handelt.

Entsprechend dem Verfahren erzeugt eine erste der vorgenannten, untereinander nicht über einen Quantenkanal verbundenen Netzeinrichtungen mit einer anderen dieser Netzeinrichtungen auszutauschende QKD-Schlüssel gemeinsam mit einem hier und im Weiteren als fliegenden QKD-Knoten bezeichneten Knoten, nämlich mit einer einen solchen QKD-Knoten ausbildenden, an einem Flugzeug angeordneten Einrichtung. Die entsprechende erste, mit einer Quantenquelle ausgestattete Netzeinrichtung tut dies, indem sie für eine Zeitdauer, in welcher sie im Sichtbarkeitsbereich des fliegenden QKD-Knotens ist, mit diesem temporär eine einen Quantenkanal umfassende QKD-Verbindung unterhält. Über den Quantenkanal dieser QKD-Verbindung überträgt sie zur Erzeugung von QKD-Schlüsseln durch ihre Quantenquelle erzeugte optische Quantenzustände an den diese Quantenzustände empfangenden fliegenden QKD-Knoten. Letzterer ist dabei aus optischer Sicht ausschließlich zum Empfang derartiger optischer Quantenzustände mittels eines dafür von ihm umfassten Empfängers ausgebildet. Der betreffende fliegende QKD-Knoten verfügt hingegen selbst nicht über Mittel zur Aussendung entsprechender Quantenzustände. Er verfügt allerdings selbstverständlich (daher in den Patentansprüchen nicht ausdrücklich erwähnt) außerdem über vorzugsweise funkbasierte, gegebenenfalls aber ebenfalls optische Mittel zum Aufbau klassischer Verbindungskanäle, wie insbesondere speziell gesicherter Protokoll-Kanäle (Protokoll-Link) für die QKD (Quantum Key Distribution), wobei im Rahmen der QKD einem jeweiligen Quantenkanal jeweils ein solcher Protokolkanal zugeordnet ist.

Bei den Netzeinrichtungen, welche QKD-Schlüssel mit Hilfe des fliegenden QKD-Knotens miteinander austauschen, handelt es sich um vorzugsweise ortsfeste QKD-Bodenstationen mit einem Laser zur Erzeugung und Aussendung jeweils zufälliger Quantenzustände (Quantenquelle). Das heißt, die jeweils gemeinsam einerseits durch die vorgenannte erste Netzeinrichtung (QKD-Bodenstation) und den fliegenden QKD-Knoten sowie andererseits durch die vorgenannte andere Netzeinrichtung (QKD-Bodenstation) und den fliegenden QKD-Knoten erzeugten QKD-Schlüssel werden demgemäß jeweils nach dem Prinzip eines Ground-to-Air-QKD-Verfahrens erzeugt - QKD-Knoten mit Quantenquelle am Boden (Ground), QKD-Knoten, ausschließlich zum Empfang von Quantenzuständen ausgebildet, in der Luft (Air).

Das Verfahren ist weiterhin so gestaltet, dass der entsprechend ausgebildete fliegende QKD-Knoten gemeinsam mit der vorgenannten ersten Netzeinrichtung (QKD-Bodenstation) erzeugte sowie jeweils an einen sie eindeutig bezeichnenden Identifikator (synonym nachfolgend auch als Schlüssel-ID bezeichnet) gekoppelte QKD-Schlüssel jeweils bitweise XOR-verknüpft mit jeweils einem von dem fliegenden QKD-Knoten gemeinsam mit der anderen der beiden eingangs genannten Netzeinrichtung in gleicher Weise erzeugten QKD-Schlüssel.

Die dabei jeweils entstehende Bitsequenz sendet der fliegende QKD-Knoten zusammen mit den Schlüssel-IDs der in ihr verknüpften QKD-Schlüssel sowohl an die vorgenannte erste als auch an die vorgenannte andere Netzeinrichtung (QKD-Bodenstation, zum Beispiel als Teil eines Metronetzes) über einen klassischen Kanal. Die entsprechende Bitsequenzen empfangenden Netzeinrichtungen (QKD-Bodenstationen) extrahieren aus einer jeweiligen Bitsequenz den von dem fliegenden QKD-Knoten gemeinsam mit der jeweils anderen Netzeinrichtung erzeugten QKD-Schlüssel durch abermalige bitweise XOR-Verknüpfung dieser Bitsequenz mit dem durch sie gemeinsam mit dem fliegenden QKD-Knoten erzeugten, in dieser jeweiligen Bitsequenz verknüpften sowie durch die zusammen mit der Bitsequenz übertragene Schlüssel-ID bezeichneten QKD-Schlüssel. Im Ergebnis dessen liegen dann die jeweils beiden in einer solchen Bitsequenz miteinander XOR-verknüpften quantensicheren Schlüssel (QKD-Schlüssel) gleichermaßen bei den beiden sie miteinander austauschen Netzeinrichtungen (QKD-Bodenstationen) vor, welche jeweils einen dieser Schlüssel gemeinsam mit dem fliegenden QKD-Knoten erzeugt haben.

QKD-Schlüssel, das heißt mithilfe quantenmechanischer Mittel erzeugte, insbesondere zur symmetrischen Verschlüsselung nutzbare Schlüssel, welche entsprechend den vorstehenden Abläufen identisch bei zwei von gegebenenfalls mehr Netzeinrichtungen vorliegen, können von diesen beiden Netzeinrichtungen für einen symmetrisch verschlüsselten, mangels eines die Netzeinrichtungen direkt verbindenden Quantenkanals, über einen klassischen Kanal erfolgenden Datenaustausch genutzt werden. Ein wesentlicher Vorteil des Verfahrens ist es dabei, dass die von dem fliegenden QKD-Knoten einerseits gemeinsam mit einer ersten Netzeinrichtung (QKD-Bodenstation) und andererseits mit einer zweiten Netzeinrichtung nach einem QKD-Verfahren erzeugten QKD-Schlüssel zum Austausch zwischen diesen beiden Netzeinrichtungen (Bodenstationen) stets nur in Form einer durch XOR-Verknüpfung jeweils zweier dieser QKD-Schlüssel entstandenen Bitsequenz übertragen werden, so dass die eigentlichen Schlüssel auf ihrem Übertragungsweg über den klassischen Kanal zu keiner Zeit offenliegen.

Mit Blick auf den vorgenannten klassischen Kanal, über welchen die jeweils miteinander XOR-verknüpften QKD-Schlüssel und die sie jeweils bezeichnenden Identifikatoren (Schlüssel-IDs) übertragen werden, geschieht die Übertragung der entsprechenden Bitsequenzen vorzugsweise über eine dafür von dem fliegenden QKD-Knoten zu den jeweiligen QKD-Bodenstationen aufgebaute Satellitenverbindung.

Der zuvor hinsichtlich seines grundsätzlichen Ablaufs dargestellte Schlüsselaustausch, respektive Austausch von QKD-Schlüsseln, kann unter Anwendung zweier unterschiedlicher Betriebsmodi des fliegenden QKD-Knotens erfolgen. Entsprechend einem ersten Betriebsmodus arbeitet der fliegende QKD-Knoten dabei in der Betriebsform "Relaisstation" (= Relay Station). Dieser Betriebsmodus wird genutzt, um QKD-Schlüssel entsprechend dem erfindungsgemäßen Verfahren zwischen zwei (nicht über einen Quantenkanal direkt miteinander verbundenen) QKD-Bodenstationen auszutauschen, welche sich beide gleichzeitig im Sichtbarkeitsbereich, das heißt in einer Line of Sight (LoS) zu dem den fliegenden QKD-Knoten transportierenden Flugzeug befinden. Hierdurch ist es für die Zeitdauer des Andauerns dieser Situation (LoS) möglich, dass der fliegende QKD-Knoten mit beiden QKD-Bodenstationen gleichzeitig QKD-Schlüssel erzeugt und diese QKD-Schlüssel gewissermaßen unmittelbar prozessiert, indem er jeweils einen gemeinsam mit einer ersten der beiden QKD-Bodenstationen erzeugten QKD-Schlüssel XOR-verknüpft mit jeweils einem mit der anderen QKD-Bodenstation gemeinsam erzeugten QKD-Schlüssel und die hieraus resultierende Bitsequenz mit den zugehörigen Identifikatoren der in ihr verknüpften QKD-Schlüssel umgehend an beide QKD-Bodenstationen überträgt. Der fliegende QKD-Knoten weist hierbei allenfalls eine Art Pufferspeicher auf, in welcher er die mit den QKD-Bodenstationen gemeinsam erzeugten QKD-Schlüssel nur kurzzeitig in einer sicheren Umgebung zwischenspeichert und diese nach erfolgreicher Übertragung an die QKD-Bodenstationen wieder verwirft.

In einem anderen, kumulativ zu oder an Stelle der zuvor beschriebenen Betriebsart vorgesehen Betriebsmodus arbeitet der fliegende QKD-Knoten als "Fliegender Trusted Key Safe". Dieser Betriebsmodus wird für einen nach dem erfindungsgemäßen Verfahren erfolgenden Austausch von QKD-Schlüsseln zwischen einer Mehrzahl von Bodenstationen, von denen sich jeweils nur eine oder wenige gleichzeitig oder aber für eine gewisse Zeit auch gar keine in einer Line of Sight zum fliegenden QKD-Knoten befindet/befinden, zur Schlüsselverteilung genutzt. Hierbei werden sämtliche durch den fliegenden QKD-Knoten gemeinsam mit jeweils einer der verschiedenen QKD-Bodenstationen erzeugten QKD-Schlüssel in einem zu dem fliegenden QKD-Knoten gehörenden gesicherten Schlüsselspeicher in Zuordnung zu ihrer jeweiligen Schlüssel-ID (Identifikator) gespeichert. Was den beziehungsweise respektive die an dieser Stelle nochmals angesprochenen Identifikatoren anbelangt, so können diese beispielsweise auch eine codierte Kennung der jeweiligen QKD-Bodenstation enthalten, mit welcher der zugehörige QKD-Schlüssel im Zusammenwirken mit dem fliegenden QKD-Knoten erzeugt wurde. Hierdurch ist dann unmittelbar die Zuordnung eines jeweiligen QKD-Schlüssels zu der an seiner Erzeugung beteiligten QKD-Bodenstation möglich.

Ferner verknüpft der mindestens eine fliegende QKD-Knoten in diesem Betriebsmodus jeden gemeinsam mit einer ersten QKD-Bodenstation erzeugten QKD-Schlüssel mit immer jeweils einem der QKD-Schlüssel bitweise XOR, die er mit den anderen, der mit ihm und der ersten QKD-Bodenstation gemeinsam ein System ausbildenden QKD-Bodenstationen erzeugt hat. Vorzugsweise verknüpft der fliegende QKD-Knoten letztlich jeden QKD-Schlüssel mit jedem anderen, wobei aber in jeder auf diese Weise entstehenden Bitsequenz immer nur zwei QKD-Schlüssel miteinander verknüpft sind. Die entstehenden Bitsequenzen legt er ebenfalls für eine spätere Auslieferung an die einzelnen jeweils für ihren Empfang bestimmten QKD-Bodenstationen in Zuordnung zu den Schlüssel-IDs der in ihnen jeweils verknüpften QKD-Schlüssel in dem gesicherten Speicher ab.

Die Verteilung der QKD-Schlüssel zwischen den verschiedenen QKD-Bodenstationen erfolgt bei der zuvor dargestellten Betriebsart unter Nutzung eines Multipoint-zu-Multipoint-Protokolls, wobei die einzelnen QKD-Bodenstationen zu dem Flugzeug, respektive zu dem von ihm mitgeführten fliegenden QKD-Knoten ausschließlich Punkt-zu-Punkt-Verbindungen etablieren. Hierbei kann sich beispielsweise der nachfolgende Ablauf vollziehen.
1. Es wird eine QKD-Verbindung mit nachfolgendem Schlüsselaustausch N zwischen einer Bodenstation N und dem fliegenden QKD-Knoten des Flugzeugs auf einem Kanal N etabliert. Die Anzahl der parallel unterhaltbaren QKD-Verbindungen entspricht der Anzahl der optischen Kanäle, die das Flugzeug empfangen kann.
2. Die QKD-Schlüssel werden authentifiziert, fehlerkorrigiert und einer "Privacy Amplification" Prozedur unterworfen, um sichere kryprographische Schlüssel zu erzeugen. Dies geschieht über den notwendigen klassischen QKD-Servicekanal, respektive den QKD-Protokollkanal, nämlich physisch über eine klassische Satellitenverbindung des fliegenden QKD-Knotens des Flugzeuges mit der jeweiligen Bodenstation, der allerdings ebenfalls gesichert, nämlich quantenverschlüsselt ist.
3. Nach der Schlüsselberechnung werden alle Schlüssel im sicheren Schlüsselspeicher des fliegenden QKD-Knotens des Flugzeugs und in den sicheren Schlüsselspeichern der QKD-Basisstationen bis zur Landung des Flugzeugs verwahrt.

Der QKD-Knoten am Flugzeug tauscht nun mittels dafür ausgebildeter Einheiten während eines Fluges mit mehreren QKD-Basisstationen quantensichere Schlüssel aus. Dies können beispielsweise auf einem Flug von Frankfurt nach Rom mögliche Basisstationen in Nürnberg, München, Innsbruck, Verona, Bologna, Florenz und Rom sein. Dies sind beispielsweise:
1. (Schlüssel 1, Schlüssel-ID1) ausgetauscht mit Frankfurt (Bodenstation 1)
2. (Schlüssel 2, Schlüssel-ID2) ausgetauscht mit München (Bodenstation 2)
3. (Schlüssel 3, Schlüssel-ID3) ausgetauscht mit Innsbruck (Bodenstation 3)
4. (Schlüssel 4, Schlüssel-ID4) ausgetauscht mit Verona (Bodenstation 4)
5. (Schlüssel 5, Schlüssel-ID5) ausgetauscht mit Bologna (Bodenstation 5)
6. (Schlüssel 6, Schlüssel-ID6) ausgetauscht mit Florenz (Bodenstation 6)
7. (Schlüssel 7, Schlüssel-ID7) ausgetauscht mit Rom (Bodenstation 7)

Vorstehend und im Weiteren werden die QKD-Bodenstationen, sprachlich vereinfachend, teilweise verkürzt als Bodenstation bezeichnet. Soweit nicht anders angegeben, handelt es sich jedoch bei allen hier genannten Bodenstationen stets um QKD-Bodenstationen.

Ausschließlich während des Fluges berechnen vom fliegenden QKD-Knoten umfasste Einheiten nun die bitweise XOR-Verknüpfung (Multiplikation) aller ausgetauschten Schlüssel miteinander, derart dass
1. Schlüssel1 ⊗ Schlüssel2 mit der Schlüssel-ID1 und Schlüssel-ID2
2. Schlüssel1 ⊗ Schlüssel3 mit der Schlüssel-ID1 und Schlüssel-ID3
3. Schlüssel1 ⊗ Schlüssel4 mit der Schlüssel-ID1 und Schlüssel-ID4
4. ....
5. Schlüssel7 ⊗ Schlüssel6 mit der Schlüssel-ID7 und Schlüssel-ID6
verknüpft wird, wobei die bitweise XOR-Verknüpfung durch das Symbol ⊗ dargestellt ist. Der fliegende QKD-Knoten sendet dann die bitweise multiplizierten QKD-Schlüssel mit den entsprechenden Schlüssel-IDs an die entsprechenden QKD-Bodenstationen über einen quantengesicherten klassischen Kanal, zum Beispiel über eine Satellitenverbindung.

Das heißt, der fliegende QKD-Knoten sendet, respektive die von ihm umfassten Einheiten senden
1. Schlüssel1 ⊗ Schlüssel2 wird mit den Schlüssel-IDs an Bodenstation 1 und Bodenstation 2 gesendet
2. Schlüssel1 ⊗ Schlüssel3 wird mit den Schlüssel-IDs an Bodenstation 1 und Bodenstation 3 gesendet
3. Schlüssel1 ⊗ Schlüssel4 wird mit den Schlüssel-IDs an Bodenstation 1 und Bodenstation 4 gesendet
4. ....
5. Schlüssel7 ⊗ Schlüssel6 wird mit den Schlüssel-IDs an Bodenstation 7 und Bodenstation 6 gesendet

Somit können nun alle QKD-Bodenstationen unter Anwendung ihres, original mit dem Flugzeug ausgetauschten Schlüssels, einen gemeinsamen Schlüssel mit allen anderen QKD-Bodenstationen berechnen. Dargestellt am Beispiel der QKD-Bodenstation 1, erfolgt dies entsprechend den folgenden Schritten:
1. QKD-Bodenstation 1 erhält vom Flugzeug, respektive vom fliegenden QKD-Knoten, den Schlüssel (Schlüssel1 ⊗ Schlüssel2) mit der Schlüssel-ID1 und der Schlüssel-ID2.
2. QKD-Bodenstation 1 holt ausgehend von der Schlüssel-ID1 den passenden, zuvor mit dem Flugzeug ausgetauschten QKD Schlüssel "Schlüssel1" aus ihrem sicheren Schlüsselspeicher.
3. QKD-Bodenstation 1 berechnet: (Schlüssel1 ⊗ Schlüssel2) x Schlüssel1 = Schlüssel2.
4. Somit hat QKD-Bodenstation 1 einen gemeinsamen Schlüssel mit der QKD-Bodenstation 2, nämlich Schlüssel2.

Dieses Protokoll lässt sich analog für alle anderen QKD-Bodenstationen ausführen.

Die Durchführung einer sicheren Kommunikation beispielsweise von QKD-Bodenstation 1 zu QKD- Bodenstation 2 kann dabei entsprechend dem folgenden Ablauf vonstattengehen:
1. Möchte die QKD-Bodenstation 1 mit der QKD-Bodenstation 2 eine sichere Kommunikationsverbindung aufbauen, so schickt die QKD-Bodenstation 1 der QKD-Bodenstation 2 eine Nachricht mit der Schlüssel-ID2.
2. Die QKD-Bodenstation 2 holt den Schlüssel 2, passend zu der Schlüssel-ID 2, aus ihrem sicheren Schlüsselspeicher.
3. Somit liegt sowohl bei der QKD-Bodenstation 1 als auch bei der QKD-Bodenstation 2 derselbe Schlüssel vor, den die Bodenstationen nun für eine symmetrische verschlüsselte Verbindung, respektive verschlüsselte Datenübertragung (zum Beispiel durch eine AES-Verschlüsselung oder durch eine One-Time-Pad-Verschlüsselung) nutzen könnten.

Der Betriebsmodus "Fliegender Trusted Key Safe" erzeugt somit die Möglichkeit eines quantensicheren Schlüsselaustausches aller QKD-Bodenstationen untereinander, welche mit dem fliegenden QKD-Knoten am Flugzeug während des Fluges QKD-Schlüssel ausgetauscht haben - somit erfolgt ein Multi-Point-zu-Multi-Point-Schlüsselaustausch. Im Rahmen des zuvor verwendeten Beispiels eines Fluges von Frankfurt nach Rom erhält somit die Frankfurter QKD-Bodenstation quantensichere Schlüssel für eine Datenverbindung nach Nürnberg, München, Innsbruck, Verona, Bologna, Florenz und Rom. Beim Einsatz von "QKD Air Knoten" auf internationalen und interkontinentalen Flügen könnte eine globale Verteilung von quantensicheren Schlüsseln erfolgen.

Werden zudem die Schlüssel aus dem Schlüsselspeicher des QKD-Knotens eines Flugzeuges nicht sofort nach dem Flug gelöscht, sondern über einen bestimmten Zeitraum vorgehalten (zum Beispiel eine Woche oder einen Monat im gesicherten Schlüsselspeicher gespeichert), so könnten quantensichere Schlüssel für alle Kombinationen der QKD-Bodenstationen / QKD-Metronetze berechnet werden, die das Flugzeug innerhalb des betrachteten Zeitraums abgeflogen ist. Die fliegenden "Air QKD Schlüsselspeicher" könnten somit eine entscheidende Rolle in der internationalen und auch globalen Verknüpfung der QKD-Metronetze spielen.

Die theoretische Sicherheit des Quantenschlüsselaustausches ist bewiesen und hängt maßgeblich von der Gültigkeit der Gesetze der Quantenmechanik ab, während die praktische Sicherheit abhängig von der technischen Implementierung des QKD-Systems und der Möglichkeiten von technischen Side Channels ist.

Die Sicherheit des trusted QKD-Aufbaus in einem Flugzeug ist entscheidend für die Sicherheit des Gesamtsystems. Der mobile QKD-Aufbau muss bestenfalls in einem manipulationssicheren Gehäuse erfolgen, der als Ganzes geprüft, zertifiziert und in das Flugzeug eingebaut wird. Eine maximal mögliche Trennung der QKD-Einheit vom Rest des Flugzeuges muss gefunden werden. Eine Verbindung zur Stromversorgung und zum satellitenunterstützen Kommunikationssystem des Flugzeuges ist ausschließlich während des Fluges notwendig. Bei Flughöhen unter z.B. 1000 m, das heißt, in möglicher Reichweite zu terrestrischen Mobilfunknetzen, wird der QKD-Aufbau komplett ausgeschaltet, wird stromlos, verblendet und ist somit nicht mehr angreifbar. Alle Bauteile werden in einem manipulationssicheren Aufbau gefertigt, der seinen Betrieb bei Angriffen jeglicher Art einstellt, bis hin zur Zerstörung. Die Funktion des mobilen QKD-Aufbaus sollte in regelmäßigen Wartungsintervallen des Flugzeuges neu verifiziert werden.

Der QKD-Aufbau lässt also nur im Flugbetrieb oberhalb einer Mindestflughöhe Kommunikationsverbindungen zu. Hier sind nur der kohärente, authentifizierte QKD-Laser der QKD-Bodenstation und ein satellitengestütztes, besonders gesichertes Kommunikationsnetz zur Kommunikation zugelassen. Somit sind Manipulationsmöglichkeiten potenzieller Angreifer deutlich eingeschränkt.

Ausgewählte nationale Fluggesellschaften werden als Diensterbringer eines fluggestützten QKD-Systems ausgewählt. Diese Flagship Carrier, die zumeist Staatsbeteiligung haben, lassen sich für den Betrieb der mobilen QKD-Anlagen zertifizieren. Flugzeuge unterliegen generell sehr hohen eigener Sicherheitsstandards, und den Sicherheitsstandards der Flughäfen, um Manipulationen an Flugzeugen zu vermeiden.

Für das vorgestellte Verfahren lassen sich folgende Sicherheitsbetrachtungen vornehmen. Die Sicherheit der Lösung ist selbstverständlich auch stark von der Sicherheit der QKD-Bodenstationen abhängig. Die QKD-Bodenstationen sollten daher ebenfalls einer Sicherheitszertifizierung unterliegen, sowie manipulationssichere Aufbauten und manipulationssichere Datenübertragung unterstützen. Die QKD-Bodenstationen können Bestandteile von QKD-Metronetzen sein und als Gateway fungieren, ebenso wie "stand-alone" Systeme an internationalen Standorten wie Botschaften, militärischen Außenposten oder internationalen Wirtschaftsstandorten.

Wie das zuvor ausführlich dargestellte Verfahren bereits erkennen lässt, umfasst ein erfindungsgemäßes, zur Durchführung dieses Verfahrens geeignetes System für den Austausch quantensicherer QKD-Schlüssel mindestens zwei jeweils an ein Netzwerk angebundene und mit quantenmechanischen Mitteln zur Erzeugung von QKD-Schlüsseln ausgestattete, jedoch untereinander nicht direkt über einen Quantenkanal miteinander verbundene Netzeinrichtungen, nämlich QKD-Bodenstationen, sowie wenigstens einen QKD-Transferknoten, nämlich einen fliegenden QKD-Knoten. Der wenigstens eine fliegende QKD-Knoten ist an einem Flugzeug angeordnet und als Endpunkt einer zur Erzeugung von QKD-Schlüsseln über einen Quantenkanal aufgebauten QKD-Verbindung aus optischer ausschließlich zum Empfang über den betreffenden Quantenkanal übertragener quantenmechanischer Zustände ausgebildet. Der fliegende QKD-Knoten verfügt hierfür über mindestens einen optischen Empfänger zum Empfang von Lasersignalen. Klarstellend sei an dieser Stelle erwähnt, dass zu dem vorgenannten, respektive zu allen im Rahmen der Beschreibung der Erfindung angesprochenen Quantenkanälen, selbstverständlich jeweils ein mittels einer klassischen (speziell gesicherten) Verbindung realisierter Protokollkanal (Protokoll-Link) gehört, über welchen der fliegende QKD-Knoten die Schlüsselerzeugung betreffende Daten (es handelt sich hierbei nicht um Quantenzustände) empfängt und auch aussendet.

Weiterhin ist der wenigstens eine fliegende QKD-Knoten dazu ausgebildet, von ihm gemeinsam mit QKD-Bodenstationen während des temporären Bestehens einer QKD-Verbindung erzeugte QKD-Schlüssel bitweise miteinander XOR zu verknüpfen. Das heißt, der fliegende QKD-Knoten ist dazu ausgebildet, einen gemeinsam mit einer ersten QKD-Bodenstation erzeugten und durch eine Schlüssel-ID eindeutig bezeichneten QKD-Schlüssel mit einem gemeinsam mit einer anderen QKD-Bodenstation erzeugten und ebenfalls durch einen eindeutigen Identifikator bezeichneten QKD-Schlüssel miteinander bitweise XOR zu verknüpfen.

Er ist ferner dazu ausgebildet, die bei dieser Verknüpfung entstehende Bitsequenz gemeinsam mit den Identifikatoren (Schlüssel-IDs) der in ihr verknüpften QKD-Schlüssel über einen klassischen Kanal an die QKD-Bodenstationen zu übertragen, deren QKD-Schlüssel in der jeweiligen Bitsequenz miteinander verknüpft sind. Die zum System gehörenden QKD-Bodenstationen sind dazu ausgebildet, mit dem mindestens einen fliegenden QKD-Knoten temporär, nämlich für die Zeitdauer, in der sich dieser in ihrem Sichtbarkeitsbereich, das heiß in einer Line of Sight (LoS) befindet, eine einen Quantenkanal umfassende QKD-Verbindung mit dem fliegenden QKD-Knoten zu unterhalten und über deren Quantenkanal optische Quantenzustände auszusenden.

Durch wen die jeweilige QKD-Verbindung aufgebaut wird, also ob der Verbindungsaufbau durch eine QKD-Bodenstation oder durch den fliegenden QKD-Knoten initiiert wird, ist hierbei ohne Belang und letztlich eine Frage der jeweiligen Implementierung von Verfahren und System. Entsprechendes gilt auch für den hier bewusst nicht näher betrachteten, zu einer solchen QKD-Verbindung gehörigen klassischen Kanal (Protokollkanal).

Die QKD-Bodenstationen sind aber jedenfalls weiterhin dazu ausgebildet, aus einer von einem fliegenden QKD-Knoten empfangenen Bitsequenz durch bitweise XOR-Verknüpfung mit dem von ihnen gemeinsam mit dem fliegenden QKD-Knoten erzeugten, durch den zusammen mit der Bitsequenz empfangenen Identifikator bezeichneten QKD-Schlüssel einen durch eine andere QKD-Bodenstation gemeinsam mit dem fliegenden QKD-Knoten erzeugten QKD-Schlüssel zu extrahieren.

Die QKD-Bodenstationen sind außerdem dazu ausgebildet, entsprechende durch sie extrahierte QKD-Schlüssel in Zuordnung zu ihrem jeweiligen Identifikator zum Zweck der späteren Verwendung in einem gesicherten Speicher (beispielsweise als Teil eines Hardwaresicherheitsmoduls - HSM ausgebildet) abzulegen. Sie sind darüber hinaus schließlich noch dazu ausgebildet, Daten mit einer anderen QKD-Bodenstation unter Verwendung eines bei ihnen gespeicherten QKD-Schlüssels symmetrisch verschlüsselt über einen klassischen Kanal auszutauschen und dazu dieser anderen QKD-Bodenstationen den Identifikator, respektive die Schlüssel-ID, des zur Verschlüsselung der Daten verwendeten, bei dieser anderen QKD-Bodenstation ebenfalls vorliegenden QKD-Schlüssels mitzuteilen.

Die durch die bitweise XOR-Verknüpfung entsprechender QKD-Schlüssel gebildeten, an die jeweils dafür vorgesehenen QKD-Bodenstationen zusammen mit entsprechenden Identifikatoren übertragenen Bitsequenzen werden, wie bereits ausgeführt, vorzugsweise über eine Satellitenverbindung übertragen. Demgemäß umfasst das hier beschriebene System vorzugsweise mindestens einen, realistischerweise aber mehrere, die Kommunikation zwischen den QKD-Bodenstationen und dem fliegenden QKD-Knoten sicherstellende Kommunikationssatelliten. In einer praktischen Umsetzung wird das System zudem eine Vielzahl von QKD-Bodenstationen und mehrere, jeweils mit einem fliegenden QKD-Knoten ausgestattete Flugzeuge umfassen.

Unter Verweis auf die zum Verfahren beschriebenen unterschiedlichen Betriebsmodi des, respektive der fliegenden QKD-Knoten kann ein jeweiliger fliegender QKD-Knoten als "Fliegender Trusted Key Safe" ausgebildet sein, nämlich insbesondere über einen gesicherten Schlüsselspeicher und ein zugehöriges Schlüsselmanagement verfügen.

Ein jeweiliger fliegender QKD-Knoten ist entsprechend einer bevorzugten Ausbildungsform an der Unterseite des Rumpfes eines Flugzeugs in einem für Laserstrahlen durchlässigen, transparenten Gehäuse angeordnet.

Wie bereits erwähnt, können die QKD-Bodenstationen beispielsweise jeweils Teil eines Metronetzes, genauer gesagt, eines QKD-gesicherten Metronetzes, also eines QKD-Metronetzes, sein. QKD-Metronetze sind faserbasierte oder LOSbasierte Quanten-Kommunikationsnetze, die einen QKD-Schlüsselaustausch in einer Region mit einer Reichweite von bis zu ca. 100 km sicherstellen. QKD-Metronetze werden in Metropolregionen, zum Beispiel in Berlin, Hamburg, Frankfurt oder München, etc. aufgebaut werden.

QKD-Metronetze nutzen Protokolle wie zum Beispiel BB84, Coherent One Way oder Ekert, um an zwei unterschiedlichen Orten gleiche quantensichere Schlüssel über einen dedizierten Quantenkanal zu verteilen. Die Schlüssel werden in hochsicheren Schlüsselspeichern zur späteren Verwendung vorgehalten. Eine QKD-Bodenstation, oder auch "QKD Ground Basisstation", wird nun integraler Bestandteil eines QKD-Metronetzes und ist, zusammen mit dem fliegenden QKD-Knoten, oder auch "QKD Air Knoten", in der Lage, die Reichweite des Schlüsselaustausches über QKD-Metronetze hinaus auf nationale, internationale bis hin zu interkontinentalen und globalen Reichweiten zu erhöhen.

Ein wesentlicher Vorteil der Erfindung ist die Ausnutzung nationaler, internationaler und interkontinentaler Flugkapazitäten von zertifizierten Fluggesellschaften zur Durchführung des Quantenschlüsselaustausches (Austausch von QKD-Schlüsseln). Es handelt sich demnach um die erweiterte Verwendung einer bereits bestehenden Ressource. Flugzeuge lassen sich leicht durch erdgebundene Basisstationen, respektive QKD-Bodenstationen, verfolgen und die Frequenz des europäischen Flugverkehrs lässt eine ausreichend hohe Austauschrate an QKD-Schlüsseln zu. Da alle großen europäischen Fluggesellschaften sogar international eine Vielzahl von Ländern anfliegen, wird durch das System ein global verfügbares Sicherheitssystem geschaffen.

So lässt sich nicht nur ein System innerhalb der europäischen Grenzen, sondern auch ein weltweit operierendes europäisches QKD-System erschaffen. Europäische Botschaften, militärische Einrichtungen, Hauptquartiere großer Wirtschaftsunternehmen lassen sich so effektiv, mehrfach am Tag mit quantensicheren, nämlich mit QKD-Schlüsseln, versorgen. Das beschriebene Verfahren tritt in direkte Konkurrenz zur Satelliten-QKD. Während Satelliten aber nur als QKD-Relay-Knoten auftreten, kann die hier beschriebene Erfindung im Betriebsmodus "Fliegender Trusted Key Safe" einen "Multi Point zu Multi Point" Quantenschlüsselaustausch aller QKD-Bodenstationen entlang der Flugroute ermöglichen. Der Schlüsselaustausch zwischen allen Bodenstationen kann schon während der Flugzeit erfolgen.

Eine durch Flugzeuge gestützte Lösung hat im Vergleich zu einer durch Satelliten gestützten Lösung folgende Vorteile:
1. Wartbarkeit. Während der QKD-Aufbau eines Satelliten nur beschränkt wartbar ist, können die Aufbauten in einem Flugzeug gewartet, erweitert und sogar regelmäßig validiert und rezertifiziert werden.
2. Sichtbarkeit. Die Sichtbarkeit eines Verkehrsflugzeugs für eine QKD-Bodenstation übersteigt den Zeitraum der Sichtbarkeit eines niedrigorbitalen Satelliten.
3. Niedrigere Flugbahn. Aufgrund der niedrigeren Flughöhe ist die benötigte Genauigkeit, um einen Quantenlink (Quantenkanal) zwischen einer QKD-Bodenstation und einem Flugobjekt, also einem fliegendem QKD-Knoten aufzubauen, geringer. Auch werden die Anforderungen Quantenquelle, nämlich an die kohärente Strahlenquelle (zum Beispiel einen Laser) geringer.

Die notwendigen Investitionen sind für eine flugzeuggestützte Lösung deutlich geringer. Dies gilt zumal gemäß der hier vorgestellten Lösung in den Flugzeugen im Hinblick auf die optischen Komponenten zur QKD-Schlüsselerzeugung nur optische Empfänger angeordnet sind. Ein europäischer Flugzeugbauer könnte schon bei der Auslieferung der Flugzeuge ein zertifiziertes QKD-Modul mitliefern, welches dann von den nationalen europäischen Fluggesellschaften betrieben wird. Somit wären Kosteneinsparungen bei QKD-Modulen durch Produktionsserien möglich. Aufgrund der hohen Anzahl der Verkehrsflugzeuge ließen sich deutlich höhere Schlüsselraten erzeugen als mit vereinzelten Satelliten. Aus demselben Grund wäre ein solches System redundant gegenüber Ausfällen.

Angenommen, die bereits ausgetauschten Schlüssel blieben über eine gewisse Zeit in dem sicheren Schlüsselspeicher des QKD-Aufbaus im Flugzeug gespeichert, so ließen sich unzählige sichere Schlüsselkombinationen für nationale, internationale, interkontinentale, respektive globale Standortvernetzungen berechnen. Die Flugzeuge fliegen ständig andere Routen, was einen starken Anstieg der Kombinationen bewirkt, da mehr und mehr QKD-Bodenstationen Schlüssel mit dem fliegenden QKD-Knoten an Flugzeugen austauschen würden.

Bettet man das vorgestellte System zum Beispiel in die geplante bodengebundene europäische Sicherheitsinfrastruktur (beispielsweise EuroQCI) ein, so könnten entsprechende, das heißt mit QKD-Knoten, respektive QKD-Modulen, ausgestatte Flugzeuge als Quellen sicherer Schlüssel dienen, die von der terrestrischen Sicherheitsinfrastruktur aktiv abgefragt werden können.

Anhand von Zeichnungen sollen nachfolgend Ausführungen zu Details der Erfindung und zu möglichen Ausführungsbeispielen gegeben werden. Die Zeichnungen zeigen im Einzelnen:
- Fig. 1:: eine schematische Darstellung des Systems gemäß seiner grundsätzlichen Ausbildung,
- Fig. 2:: die schematische Darstellung eines mit einem fliegenden QKD-Knoten ausgestatteten Flugzeugs,
- Fig. 3:: die schematische Darstellung des fliegenden QKD-Knotens gemäß Fig. 2 in einer Seitenansicht.

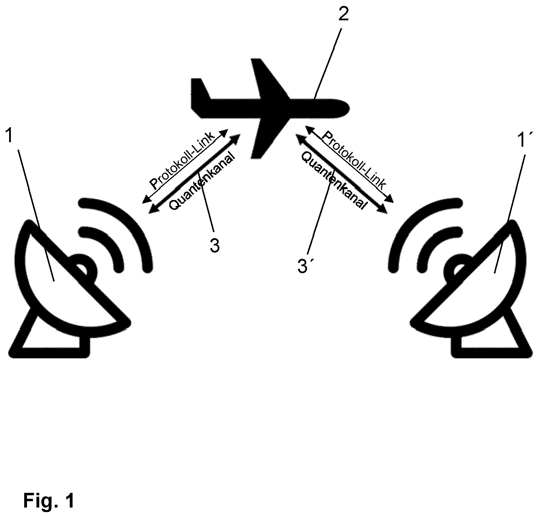

Die Fig. 1 zeigt das beschriebene System mit seinen wesentlichen Komponenten in einer stark schematisierten Darstellung. Demnach besteht das System mindestens aus einem, an einem Flugzeug ausgebildeten fliegenden QKD-Knoten 2 und aus mindestens zwei, jeweils in ein die QKD-Verschlüsselung nutzendes Netzwerk, wie beispielsweise in ein Metronetz, eingebundenen QKD-Bodenstationen 1, 1', welche insoweit Netzeinrichtungen der betreffenden Netzwerke darstellen. In der Praxis und im Hinblick auf die bereits angesprochene Möglichkeit des Aufbaus einen europäischen, gegebenenfalls auch über die Grenzen Europas oder gar global operierenden Systems, wird ein solches System selbstverständlich eine bedeutend größere Anzahl an QKD-Bodenstationen 1, 1' und von als, respektive mit einem fliegende(n) QKD-Knoten 2 ausgestatteten Flugzeugen umfassen.

Mit Blick auf die zuvor nochmals angesprochenen Metronetze können beispielsweise in einer Mehrzahl von Staaten jeweils mehrere QKD-Bodenstationen, nämlich beispielsweise mindestens eine QKD-Bodenstation 1, 1' in einzelnen Metropolregionen betreffender Staaten, angeordnet sein. Der fliegende QKD-Knoten 2 eines Flugzeugs wird dabei vorzugsweise in seiner Eigenschaft als "Knoten" mit mehreren jeweils den Empfang von Quantenzuständen und deren Verarbeitung zum Zweck der Quantenschlüsselerzeugung nach einem QKD-Verfahren ermöglichenden Einrichtungen ausgestattet sein, das heißt, wie in der schematischen Darstellung gezeigt, den Aufbau von Quantenkanälen für die Nutzung des QKD-Prinzips zu mindestens zwei QKD-Bodenstationen 1, 1' sowie zwei Satellitenverbindungen für klassische Protokollverbindungen (Protoll-Link zum Quantenkanal) gleichzeitig ermöglichen. Letzteres gilt insbesondere auch im Hinblick seinen Betriebsmodus als Relaisstation (Relay Station).

Der Betriebsmodus des fliegenden QKD-Knotens 2 (in der Darstellung nicht im Detail erkennbare, an dem Flugzeug angeordnete Einrichtung) als Relaisstation für zwei quantensichere Schlüssel (QKD-Schlüssel) austauschende, sich gleichzeitig in einer Line of Sight zum Flugzeug befindende QKD-Bodenstationen 1, 1' ist in der Fig. 1 gezeigt. Wie Bereits ausgeführt, kann der fliegende QKD-Knoten (2) eines Flugzeugs gleichzeitig, abhängig von der Verfügbarkeit freier QKD-Kanäle (jeweils Quantenkanal und zugehöriger Protokoll-Link), mit mehreren QKD-Bodenstationen 1, 1' in Kontakt treten. Der fliegende QKD-Knoten 2 des Flugzeugs tritt hierbei ausschließlich als Empfänger von Quantenzuständen über den Quantenkanal einer aufgebauten QKD-Verbindung auf, die QKD-Bodenstationen 1, 1' als Sender. Somit werden die empfindlicheren Bauteile des QKD-Aufbaus auf die stationären Einheiten (QKD-Bodenstationen) und die robusteren Bauteile des Aufbaus auf die mobile Einheit (fliegender QKD-Knoten) verlegt.

Im Folgenden werden Details der den fliegenden QKD-Knoten 2 ausbildenden technischen Einbauten/Anbauten im/am Flugzeug und Details der QKD-Bodenstationen 1, 1' beschrieben. Ein fliegender QKD-Knoten 2 weist als eine zur Ausführung eines QKD-Verfahrens ausgebildete, folglich vergleichsweise komplexe Einrichtung eine Vielzahl von Komponenten, Elementen und Bauteilen auf. Da aber der innere Aufbau von QKD-Systemen nicht Gegenstand dieser Erfindung ist, sollen nachfolgend nur einige beispielhaft genannt und etwas näher betrachtet werden:
1. Empfänger der Quantenzustände, zum Beispiel heterodyne oder Einzelphotonen-Detektoren. Die Detektoren empfangen die Signale, die von den QKD-Bodenstationen gesendet werden.
2. QKD-Hardware und -Software, umfassend Steuerelektronik, Interferometer, optische Attenuatoren, Schieber oder Filter.
3. Satelliten- (Flugzeug-) Verbindung zur Etablierung eines klassischen Kanals zwischen Flugzeug (fliegendem QKD-Knoten) und QKD-Bodenstation 1, 1' zum Zweck der Authentifizierung, Fehlerkorrektur oder "Privacy Amplification".
4. Sicherer Schlüsselspeicher zur sicheren Verwahrung der Schlüssel (HSM). Die Schlüssel werden in der Betriebsform "Relay Station" kurzzeitig im sicheren Schlüsselspeicher zwischengespeichert und später verworfen. Im Betriebsmodus "Fliegender Trusted Safe Key" werden die, während des gesamten Fluges mit mehreren QKD-Bodenstationen 1.1' ausgetauschten Schlüssel, bis zur Landung gespeichert.

Eine QKD-Bodenstation 1, 1' (Ground Basisstation) implementiert einen typischen LoS-QKD-Aufbau. Auch für diesen sollen nachfolgend nur einige wesentliche Komponenten, Elemente oder Bauteile genannt werden. Sie umfasst demnach:
1. Mindestens einen kohärenten Laser oder analoge kohärente Strahlungsquelle,
2. Quantenzufallsgeneratoren,
3. Optische Schalter, optische Dämpfer, optische Kodierer - entsprechend der verwendeten QKD-Technologie,
4. Kontroll- und Schlüssel Management Software,
5. einen sicheren Schlüssel-Speicher, vorzugsweise in einem Hardwaresicherheitsmodul (Hardware Security Module - HSM)

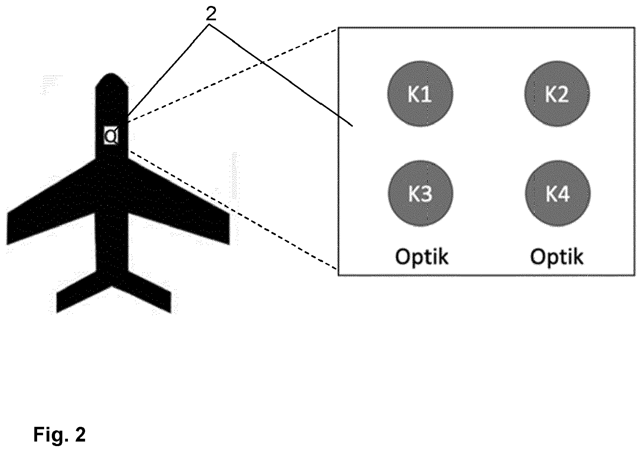

Die Fig 2. zeigt die schematische Darstellung eines mit einem fliegenden QKD-Knoten 2 ausgestatteten, respektive eines, aufgrund dieser Ausstattung, als ein solcher fungierenden Flugzeugs. Das QKD-Modul, gekennzeichnet als Q, ist in die Außenhülle des Flugzeugs integriert, das heißt an der Unterseite des Flugzeugrumpfes, beispielsweise unter einer transparenten Glashaube oder unter einem transparenten Glasdeckel, angeordnet. In der Fig. 2 ist das, aufgrund seiner Anordnung an dem Flugzeug unterhalb seines Rumpfes, den fliegenden QKD-Knoten 2 ausbildende QKD-Modul in einem zeichnerisch in symbolischer Darstellung aus dem Flugzeug herausgezogenen, rechts neben dem Flugzeug dargestellten Ausschnitt schematisch in einer Aufsicht auf das QKD-Modul von einer QKD-Bodenstation gezeigt. In dem dargestellten Beispiel umfasst das QKD-Modul und somit der fliegende QKD-Knoten 2 vier optische Empfänger zum Empfang mithilfe von Lasersignalen vermittelten Quantenzuständen. Der fliegende QKD-Knoten 2 kann somit gemäß diesem Beispiel gleichzeitig maximal 4, jeweils einen Quantenkanal 3, 3' umfassende QKD-Verbindungen zu solche Quantenzustände jeweils mittels eines Lasers aussendenden QKD-Bodenstationen 1, 1'unterhalten.

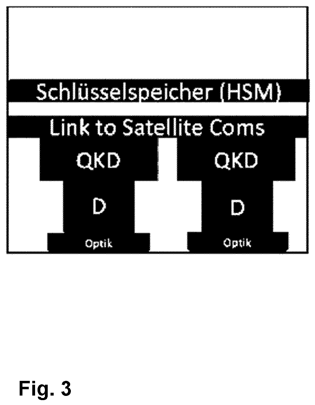

Die Fig. 3 zeigt das QKD-Modul, respektive den fliegenden QKD-Knoten 2 gemäß der Fig. 2 nochmals in einer seitlichen, aber ebenfalls sehr stark schematisierten Darstellung. Eingezeichnet sind die Optiken zur Fokussierung von vier Quanten Lichtstrahlen (Laserstrahlen), das heißt vier möglichen gleichzeitigen Verbindungen zu QKD-Bodenstationen 1, 1'. Die Quantenzustände werden durch eine Optik auf die Detektoren (D) fokussiert. Der QKD-Knoten 2 führt beim Empfang entsprechender Quantenzustände mittels eines seiner Empfänger gemeinsam mit der diese aussendenden QKD-Bodenstation 1, 1' ein QKD-Protokoll (zum Beispiel BB84) zur Schlüsselberechnung unter Nutzung des schon mehrfach erwähnten, hier aber nicht näher betrachteten Protokollkanals (Protokoll-Link) aus. Der klassische Kanal wird über die Satellitenverbindung des Flugzeugs realisiert. Ein Schlüsselspeicher, zum Beispiel ein Hardware Security Module, dient sowohl zur sicheren Aufbewahrung der Schlüssel während des Fluges, als auch als kurzzeitiger Zwischenspeicher und ist im Falle einer Betriebsweise des fliegenden QKD-Knotens 2 als "Fliegender Trusted Key Safe" durch ein Schlüsselmanagement ergänzt.

## Patentansprüche

1. Verfahren zum Austausch quantensicherer QKD-Schlüssel, das heißt mithilfe quantenmechanischer Mittel nach einem Verfahren der Quantum Key Distribution erzeugter Schlüssel, nach welchem mindestens zwei, jeweils an ein Netzwerk angebundene und mit quantenmechanischen Mitteln zur Erzeugung derartiger QKD-Schlüssel ausgestattete, jedoch untereinander direkt nicht über einen Quantenkanal miteinander verbundene Netzeinrichtungen von ihnen erzeugte QKD-Schlüssel austauschen, **dadurch gekennzeichnet, dass** eine der vorgenannten Netzeinrichtungen mit einer anderen dieser Netzeinrichtungen auszutauschende QKD-Schlüssel gemeinsam mit einem fliegenden QKD-Knoten (2), nämlich mit einer einen solchen QKD-Knoten (2) ausbildenden, an einem Flugzeug angeordneten Einrichtung, erzeugt, indem diese mit einer Quantenquelle ausgestattete, eine erste QKD-Bodenstation (1, 1') ausbildende Netzeinrichtung für eine Zeitdauer, in welcher sie im Sichtbarkeitsbereich des fliegenden QKD-Knotens (2) ist, mit diesem temporär eine einen Quantenkanal (3, 3') umfassende QKD-Verbindung unterhält und über den Quantenkanal (3, 3') dieser QKD-Verbindung durch ihre Quantenquelle erzeugte optische Quantenzustände zur Erzeugung von QKD-Schlüsseln an den Quantenzustände ausschließlich empfangenden, dazu mit einem optischen Empfänger ausgestatten fliegenden QKD-Knoten (2) überträgt und dass der entsprechend ausgebildete fliegende QKD-Knoten (2) gemeinsam mit der ersten QKD-Bodenstation (1, 1') erzeugte sowie jeweils an einen sie eindeutig bezeichnenden Identifikator gekoppelte QKD-Schlüssel jeweils bitweise XOR-verknüpft mit jeweils einem von dem fliegenden QKD-Knoten (2) gemeinsam mit der anderen Netzeinrichtung, nämlich mit einer anderen QKD-Bodenstation (1', 1), in gleicher Weise erzeugten QKD-Schlüssel und die dabei jeweils entstehende Bitsequenz zusammen mit den Identifikatoren der in ihr verknüpften QKD-Schlüssel an beide QKD-Bodenstation (1', 1) über einen klassischen Kanal überträgt und dass die, entsprechende Bitsequenzen empfangenden QKD-Bodenstationen (1, 1') aus einer jeweiligen Bitsequenz den von dem fliegenden QKD-Knoten (2) gemeinsam mit der jeweils anderen QKD-Bodenstation (1', 1) erzeugten QKD-Schlüssel durch abermalige bitweise XOR-Verknüpfung dieser Bitsequenz mit dem durch sie selbst gemeinsam mit dem fliegenden QKD-Knoten (2) erzeugten, in dieser jeweiligen Bitsequenz verknüpften sowie durch den zusammen mit der Bitsequenz übertragenen Identifikator bezeichneten QKD-Schlüssel extrahieren.

2. Verfahren nach Anspruch 1, **dadurch gekennzeichnet, dass** zur Bereitstellung eines klassischen Kanals für die Übertragung der durch bitweise XOR-Verknüpfung jeweils zweier QKD-Schlüssel erzeugten Bitsequenzen und der die in ihnen verknüpften QKD-Schlüssel jeweils eindeutig bezeichnenden Identifikatoren eine Satellitenverbindung aufgebaut wird.

3. Verfahren nach Anspruch 1 oder 2, **dadurch gekennzeichnet, dass** der mindestens eine fliegende QKD-Knoten (2) in einem Betriebsmodus als Relaisstation arbeitet, indem er einen jeweiligen, gemeinsam mit einer ersten sich in seinem Sichtbarkeitsbereich befindenden QKD-Bodenstation (1, 1') erzeugten QKD-Schlüssel unmittelbar mit einem jeweiligen, gemeinsam mit einer anderen sich in seinem Sichtbarkeitsbereich befindenden QKD-Bodenstation (1', 1) erzeugten QKD-Schlüssel bitweise XOR-verknüpft und die jeweils daraus entstehende Bitsequenz zusammen mit den Identifikatoren der in ihr verknüpften QKD-Schlüssel an die beiden betreffenden QKD-Bodenstationen (1, 1') überträgt, wobei der mindestens eine fliegende QKD-Knoten (2) die erzeugten und anschließend von ihm XOR-verknüpften QKD-Schlüssel allenfalls in einem sicheren Pufferspeicher bis zu deren erfolgreicher Zustellung an die QKD-Bodenstationen (1, 1') zwischenspeichert.

4. Verfahren nach Anspruch 1 bis 3, **dadurch gekennzeichnet, dass** der mindestens eine fliegende QKD-Knoten (2) in einem Betriebsmodus als fliegender Trusted Key Safe arbeitet, wobei er alle von ihm gemeinsam mit jeweils einer der QKD-Bodenstationen (1, 1') erzeugten QKD-Schlüssel in Zuordnung zu den sie bezeichnenden Identifikatoren in einem von ihm umfassten gesicherten Speicher ablegt und wobei er jeden gemeinsam mit einer ersten QKD-Bodenstation (1, 1') erzeugten QKD-Schlüssel mit immer jeweils einem der mit allen anderen, der gemeinsam mit ihm und der ersten QKD-Bodenstation (1, 1') ein System ausbildenden QKD-Bodenstationen (1', 1) erzeugten QKD-Schlüssel bitweise XOR-verknüpft und die dabei entstehenden Bitsequenzen für eine spätere Auslieferung an die einzelnen jeweils für ihren Empfang bestimmten QKD-Bodenstationen (1', 1) in Zuordnung zu den Identifikatoren der in ihnen jeweils verknüpften QKD-Schlüssel in dem gesicherten Speicher ablegt.

5. System zum Austausch quantensicherer QKD-Schlüssel, das heißt mithilfe quantenmechanischer Mittel nach einem Verfahren der Quantum Key Distribution erzeugter kryptographischer Schlüssel, mindestens umfassend zwei, jeweils an ein Netzwerk angebundene und mit quantenmechanischen Mitteln zur Erzeugung derartiger QKD-Schlüssel ausgestattete, jedoch untereinander direkt nicht über einen Quantenkanal miteinander verbundene Netzeinrichtungen und wenigstens einen QKD-Transferknoten, wobei es sich bei dem wenigstens einen QKD-Transferknoten um einen fliegenden QKD-Knoten (2) und bei den mindestens zwei Netzeinrichtungen um QKD-Bodenstationen (1, 1') handelt, **dadurch gekennzeichnet, dass**
- der wenigstens eine fliegende QKD-Knoten (2) an einem Flugzeug angeordnet und als Endpunkt einer zur Erzeugung von QKD-Schlüsseln über einen Quantenkanal (3, 3') aufgebauten QKD-Verbindung ausschließlich zum Empfang über diesen Quantenkanal (3, 3') übertragener quantenmechanischer Zustände mittels eines von ihm umfassten Empfängers ausgebildet ist,
- der wenigstens eine fliegende QKD-Knoten (2) weiterhin dazu ausgebildet ist, von ihm gemeinsam mit QKD-Bodenstationen (1, 1') während des temporären Bestehens einer QKD-Verbindung zu ihnen erzeugte QKD-Schlüssel bitweise miteinander XOR zu verknüpfen, nämlich einen gemeinsam mit einer ersten QKD-Bodenstation (1', 1) erzeugten und durch einen Identifikator eindeutig bezeichneten QKD-Schlüssel mit einem gemeinsam mit einer anderen QKD-Bodenstation (1', 1) erzeugten und durch einen Identifikator eindeutig bezeichneten, sowie die dabei entstehende Bitsequenz gemeinsam mit den Identifikatoren der in ihr verknüpften QKD-Schlüssel über einen klassischen Kanal an die QKD-Bodenstationen (1, 1') zu übertragen, deren QKD-Schlüssel in der Bitsequenz miteinander verknüpft sind,
- die QKD-Bodenstationen (1, 1') mindestens eine Quantenquelle umfassen und dazu ausgebildet sind, mit dem mindestens einen fliegenden QKD-Knoten (2) temporär, nämlich für die Zeitdauer, in der sich dieser in ihrem Sichtbarkeitsbereich befindet, eine einen Quantenkanal (3, 3') umfassende QKD-Verbindung zu unterhalten und an diesen fliegenden QKD-Knoten (2) über den Quantenkanal (3, 3') der QKD-Verbindung optische, durch mindestens eine Quantenquelle erzeugte Quantenzustände zu übertragen sowie auf der Basis dieser Quantenzustände mit dem diese empfangende fliegenden QKD-Knoten (2) gemeinsame QKD-Schlüssel, entsprechend einem Verfahren der Quantum Key Distribution zu erzeugen,
- die QKD-Bodenstationen (1, 1') weiterhin dazu ausgebildet sind, aus einer von einem fliegenden Knoten (2) empfangenen Bitsequenz durch bitweise XOR-Verknüpfung mit dem von ihnen gemeinsam mit dem fliegenden QKD-Knoten (2) erzeugten, durch den zusammen mit der Bitsequenz empfangenen Identifikator bezeichneten QKD-Schlüssel einen durch eine andere QKD-Bodenstation (1', 1) gemeinsam mit diesem fliegenden QKD-Knoten (2) erzeugten QKD-Schlüssel zu extrahieren sowie diesen in Zuordnung zu dem ihn bezeichnenden, ebenfalls mit der Bitsequenz empfangenen Identifikator zur späteren Verwendung zu speichern,
- die QKD-Bodenstationen (1, 1') weiterhin dazu ausgebildet sind, Daten mit einer anderen QKD-Bodenstation (1', 1) unter Verwendung eines bei ihnen gespeicherten QKD-Schlüssels symmetrisch verschlüsselt über einen klassischen Kanal auszutauschen und dazu dieser anderen QKD-Bodenstation (1', 1) den Identifikator des zur Verschlüsselung der Daten verwendeten, auch bei dieser anderen QKD-Bodenstation (1', 1) vorliegenden QKD-Schlüssels mitzuteilen.

6. System nach Anspruch 5, **dadurch gekennzeichnet, dass** dieses mindestens einen Satelliten zum Aufbau, der Übertragung der durch bitweise XOR-Verknüpfung von QKD-Schlüsseln erzeugten Bitsequenzen dienender Satellitenverbindungen umfasst.

7. System nach Anspruch 5 oder 6, **dadurch gekennzeichnet, dass** dieses eine Vielzahl von QKD-Bodenstationen (1, 1'), mehrere mit einem fliegenden QKD-Knoten (2) ausgestattete Flugzeuge und mehrere Satelliten umfasst.

8. System nach Anspruch 6 oder 7, **dadurch gekennzeichnet, dass** mindestens ein fliegender QKD-Knoten (2) gleichzeitig als fliegender Trust Key Safe ausgebildet ist, nämlich über einen gesicherten, vorzugsweise als Bestandteil eines Hardware Sicherheitsmoduls HSM ausgebildeten Schlüsselspeicher und über ein Schlüsselmanagement verfügt.

9. System nach einem der Ansprüche 5 bis 8, **dadurch gekennzeichnet, dass** ein jeweiliger QKD-Knoten (2) an einem Flugzeug an der Unterseite des Flugzeugrumpfes in einem für Laserstrahlen, zumindest im Bereich des Empfängers zum Empfang von QKD-Bodenstationen (1, 1') übertragener Quantenzustände, transparenten Gehäuse angeordnet ist.
